# EUROPÄISCHE PATENTSCHRIFT

(11) **EP 1 370 838 B1**
(45) Veröffentlichungstag und Bekanntmachung des Hinweises auf die Patenterteilung: **14.09.2005**
(21) Anmeldenummer: 02719663.3
(22) Anmeldetag: 01.03.2002
(51) Int. Cl.: G01G 21/22, G01G 17/00

(54) **Waage zum Verwiegen von Pulver enthaltenden Blisterpackungen und Verfahren zum Überprüfen der Wägeergebnisse mit einer solchen Waage.**
Scale for weighing blister packs that contain powder and method for checking weighing results with such a scale.
Balance pour peser des habillages transparents contenant de la poudre et procédé pour vérifier le résultats de pesage avec une telle balance.

(30) Priorität: 14.03.2001 DE 20104455 U
(43) Veröffentlichungstag der Anmeldung: 17.12.2003
(73) Patentinhaber: Harro Höfliger Verpackungsmaschinen GmbH, 71573 Allmersbach im Tal (DE)
(72) Erfinder: REISER, Manfred, 71364 Winnenden (DE)
(74) Vertreter: Müller, Hans
(86) Internationale Anmeldenummer: PCT/DE2002/000767
(87) Internationale Veröffentlichungsnummer: WO 2002/073143

(56) Entgegenhaltungen:
- EP-A- 0 685 714
- WO-A-01/33176
- WO-A-01/60695
- CH-A- 678 570
- DE-U- 20 104 455
- US-A- 4 619 337
- PATENT ABSTRACTS OF JAPAN vol. 2000, no. 13, 5. Februar 2001 (2001-02-05) & JP 2000 272717 A (KUWANO TATSUNARI), 3. Oktober 2000 (2000-10-03)

## Beschreibung

### TECHNISCHES GEBIET

Die vorliegende Erfindung betrifft eine Waage, mit der Blisterpackungen gewogen werden können, die mit Pulver gefüllt sind. Infolge der sehr geringen Menge des in eine einzelne Blisterpackung jeweils einzulagernden Pulvers und infolge der sehr kleinen zulässigen Gewichtstoleranzen für das Pulver muss die Waage im Mikrogramm-Gewichtsbereich arbeiten können. Die in solchen Blisterpackungen verpackten Pulver können hochwirksame Arzneimittel sein. Dies bedingt dann regelmäßig sehr kleine zulässige Gewichtsabweichungen von einem vorgegebenen Sollgewicht des jeweils in eine einzelne Blisterpackung abgepackten Pulvers. Die Erfindung betrifft auch ein Verfahren zum Überprüfen der jeweils in Blisterpackungen abgepackten richtigen Pulvermengen mittels einer solchen Waage.

### STAND DER TECHNIK

Waagen, die sehr genau auch im Mikrogramm-Gewichtsbereich arbeiten, sind bekannt. Solche Waagen könnten dem Grunde nach auch zum Überprüfen der richtigen Menge von in Blisterpackungen luftdicht verpackten Pulvern eingesetzt werden. Es haben sich in praktischen Versuchen allerdings extrem unterschiedliche Wägeergebnisse bei vergleichbaren Blisterpackungen ergeben. So betrug die festgestellte maximale Gewichtsabweichung bis zu 100 % (Prozent) der jeweils in einer Blisterpackung einzulagernden Pulvermenge. Insbesondere in der Medizintechnik werden aber nur Gewichtsabweichungen von wenigen Prozent des Füllgewichtes toleriert.

Die Zusammenfassung der japanischen Druckschrift 2000272717 behandelt eine Bestandszählung von in verschiedenen Boxen befindlichen unterschiedlich vielen Medikamenten. Dabei werden die in den verschiedenen Boxen befindlichen Medikamente durch Gewichtsüberprüfung der Boxen unter Berücksichtigung des Taragewichtes der Box ermittelt.

Die schweizer Druckschrift CH 678 570 A5 offenbart eine Windschutzkammer die sich auf dem festen Boden der Waage und nicht auf dem beweglichen Waageteller aufstützt.

Die US-Patentschrift US 4,619,337 behandelt die Ableitung hochfrequenter elektromagnetischer Wechselfelder. Diese elektromagnetischen Wechselfelder werden über einen Widerstand abgeleitet und dadurch aus dem System herausgeführt.

### DARSTELLUNG DER ERFINDUNG

Ausgehend von diesem vorbekannten Stand der Technik liegt der Erfindung die Aufgabe zugrunde, eine Waage zum Verwiegen von Blisterpackungen der eingangs genannten Art anzugeben, bei der sehr kleine Gewichtsabweichungen in der Größenordnung von etwa 0,5 % bis 1 % des jeweiligen Gewichts des eingelagerten Pulvers nachgewiesen werden können, sowie ein Verfahren anzugeben zum Überprüfen der jeweils in Blisterpackungen abgepackten richtigen Pulvermengen mittels einer solchen Waage.

Diese Erfindung ist durch die Merkmale der Ansprüche 1 und 13 gegeben. Weiterbildungen der Erfindung sind Gegenstand von sich anschließenden weiteren Ansprüchen. Die Erfindung basiert auf der Erkenntnis, dass die in der Praxis aufgetretenen sehr großen Gewichtsunterschiede nicht durch entsprechend große unterschiedliche Mengen an jeweils eingelagertem Pulver, sondern durch statische Aufladung der gewogenen Blisterpackungen verursacht werden. Die Blisterpackungen werden nämlich regelmäßig aus einem Material - auch mehrschichtigen Material - hergestellt, dessen Bestandteile aus elektrisch aufladbarem Kunststoffmaterial bestehen oder solches Material zumindest enthalten.

Erfindungsgemäß ist bei der zum Überprüfen der richtigen Menge von in Blisterpackungen luftdicht zu verpackenden Pulvern vorgesehen, den Waageteller im Inneren eines als Käfig ausgebildeten Körpers vorzusehen und den Käfig lastenmäßig am Waageteller zu befestigen, so dass entstehende Feldkräfte praktisch ausschließlich auf den Waageteller einwirken. Diese Feldkräfte werden durch ein elektrisches Feld verursacht, welches durch eine elektrisch aufgeladene und auf dem Waageteller dieser Waage aufliegende Blisterpackung erzeugt wird. Die durch die elektrische Aufladung der Blisterpackung entstehenden Feldkräfte wirken damit auf den Waageteller und werden damit in ihrer Wirkung auf das Wägeergebnis neutralisiert. Diese Kräfte können nämlich nicht auf bezüglich des Waagetellers und dessen Abstützung fremde, ortsfeste Teile der Waage einwirken.

Der Käfig ist so räumlich zum Waageteller angeordnet und an demselben befestigt, dass die jeweils zu wiegende Blisterpackung im Inneren des Käfigs platziert werden kann. Die Käfigform hat den Vorteil, dass die Feldkräfte in praktisch allen Richtungen von dem Käfig und damit für das Wägeergebnis unwirksam aufgenommen werden können.

Der Käfig wird vorteilhafterweise mit einer Öffnung versehen, durch die die jeweils zu wiegende mindestens eine Blisterpackung hineingeführt bzw. aus dem Käfig wieder entnommen werden kann. Um das Wiegegut stabil aufzunehmen, ist der Waageteller als ein Drei-Punkt-Auflager für die zu wiegenden Blisterpackungen ausgebildet.

Es hat sich ferner als vorteilhaft herausgestellt, ein winddichtes Gehäuse zumindest für den Bereich des Waagetellers so vorzusehen, dass dieses Gehäuse als Windschutz für die zumindest eine auf dem Waageteller liegende Blisterpackung dienen kann. Dieses winddichte Gehäuse besteht vorzugsweise aus geerdetem Metall oder elektrisch leitend bedampftem Glas.

Der Einsatz dieser Waage kann erfindungsgemäß verwendet werden bei der Lösung der Problematik, Blisterpackungen dahingehend zu überprüfen, ob jeweils die richtige Menge von vorgesehenem Pulver in ihr enthalten ist. Folgendes Verfahren hat sich dabei als besonders vorteilhaft herausgestellt.

Von einer Serie von mit Pulver luftdicht zu verpackenden Blisterpackungen wird nur ein bestimmter Prozentsatz dieser Blisterpackungen überprüft (Inprozesskontrolle durch zerstörende Prüfung). Das bedeutet, dass nur eine Teilmenge von Blisterpackungen überprüft wird. Alle Blisterpackungen dieser Serie werden nur dann als gute, d.h. verwertbare Blisterpackungen gewertet, wenn das gewichtsmäßige Überprüfungsergebnis einen vorgebbaren Toleranzwert nicht überschreitet. Sofern der Toleranzwert überschritten wird, wird die ganze Serie von Blisterpackungen aussortiert.

Im Einzelnen kann das Überprüfen der richtigen Menge von in Blisterpackungen luftdicht abgepacktem Pulver etwa folgendermaßen ablaufen:

Die luftdichte Hülle der zumindest einen zu überprüfenden Blisterpackung wird zumindest so weit geöffnet oder zerstört, dass das Pulver nicht mehr luftdicht verpackt ist. Dies hat den Vorteil, dass etwaige Luftüberdrücke- oder Luftunterdrücke in der Blisterpackung, die das Ergebnis gewichtsmäßig verfälschen könnten, eliminiert werden. Als nächstes wird dann das Bruttogewicht dieser zumindest einen Blisterpackung ermittelt und anschließend das Pulver aus den Packungen entfernt. Danach wird das Nettogewicht dieser zumindest einen Blisterpackung ermittelt. Dieses sich durch Differenz aus dem Brutto- und Taragewicht ergebende Nettogewicht wird mit dem Soll-Gewicht des in eine Blisterpackung einzufüllenden Pulvergewichts verglichen.

Sofern das Nettogewicht das um ein Toleranzgewicht verkleinerte oder vergrößerte Soll-Gewicht nicht unter- oder überschreitet, wird diese ursprünglich mit Pulver abgepackte und überprüfte Blisterpackung als eine sogenannte gute Blisterpackung gewertet. Andernfalls, wenn das Toleranzgewicht nicht eingehalten wird, werden ebenso wie diese überprüfte Blisterpackung auch die übrigen Blisterpackungen dieser Serie als nicht gute, d.h. als dem Ausschuss zuzuführende Blisterpackungen gewertet.

Weitere Ausgestaltungen und Vorteile der Erfindung sind den in den Ansprüchen weiterhin aufgeführten Merkmalen sowie dem nachstehend angegebenen Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:
- Fig. 1: eine Darstellung der erfindungsgemäßen Waage im Bereich ihres Waagentellers,
- Fig. 2: eine perspektivische Darstellung des in Fig. 1 dargestellten Waagen-Ausschnittes.

### WEGE ZUM AUSFÜHREN DER ERFINDUNG

Eine Waage 10 besitzt einen Waagenteller in Form eines Dreibein 12, der am Ende einer Tellerstange 14 vorhanden ist. Auf der Tellerstange 14 ist auf einer nach oben auskragenden Stütze 16 ein quaderförmiger Käfig 18 befestigt. In der Bodenplatte 20 dieses Käfigs 18 sind drei Aussparungen 22, 24, 26 vorhanden. Durch jede dieser drei Aussparungen 22, 24, 26 ragt ein Bein 12.1, 12.2, 12.3 des Dreibeins 12 hindurch. Die Spitzen 28, 30, 32 des Dreibeins 12 enden also im Inneren 34 des Käfigs 18.

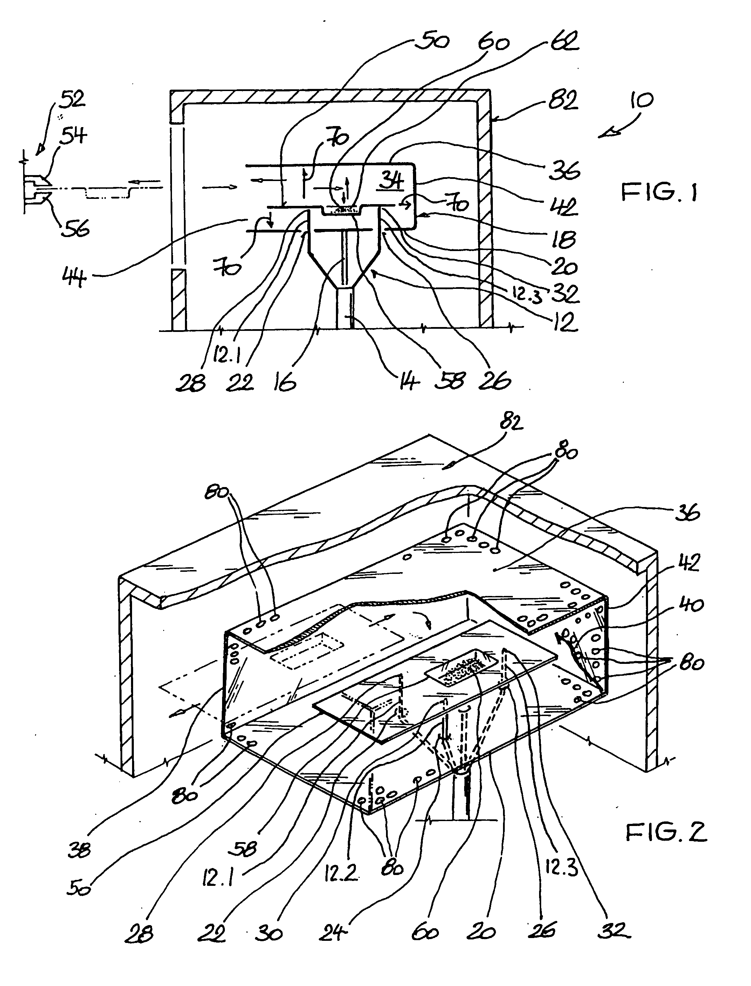

Der Käfig besitzt eine Bodenplatte 20 und eine Deckenplatte 36 sowie zwei diese beiden Platten 20, 36 verbindende Seitenwände 38, 40. Auf der Rückseite ist der Käfig durch eine Rückwand 42 verschlossen. Auf der zur Rückwand 42 gegenüber liegenden Vorderseite 44 ist der Käfig offen. Durch diese Vorderseite 44 hindurch kann eine Blisterpackung 50 in den Käfig 18 hinein und dort auf den drei Beinen 12.1, 12.2., 12.3 des Dreibeins 12 abgelegt bzw. von dem Dreibein 12 nach oben weggenommen und aus dem Käfig 18 herausgezogen werden. Das dabei erforderliche Händeln der Blisterpackung 50 erfolgt mittels einer Zange 52, deren beide Klemmbacken 54, 56 in Fig. 1 schematisiert dargestellt sind. Die drei Beine 12.1, 12.2, 12.3 könnten auch von der Bodenplatte 20 zu der Blisterpackung 50 auskragen und dabei beispielsweise aus hochgebogenen Teilen der Bodenplatte 20 bestehen. Die Aussparungen 22, 24, 26 bräuchten dann nicht vorhanden zu sein.

Die Blisterpackung 50 besitzt eine muldenförmige Vertiefung 58, in der Pulver 60 eingelagert werden kann. Im eingelagerten Zustand wird das Pulver 60 durch eine obere Folienschicht 62 der Blisterpackung 50 verschlossen, so dass das Pulver 60 dann luftdicht in der Vertiefung 58 eingelagert ist.

Die Blisterpackung 50 wird im vorliegenden Fall zweimal gewogen. Das erste Mal wird die Blisterpackung 50 mit dem Pulver 60 gewogen. Dieser Zustand ist in der Zeichnung dargestellt. Das Wiegen erfolgt mit durchstochener oberen Folienschicht 62, so dass im Inneren der Vertiefung 58 derselbe Luftdruck herrscht wie außerhalb der Blisterpackung 50. Wägeungenauigkeiten durch möglicherweise in der Packung vorhandenem Unterdruck oder Überdruck sind daher auszuschließen.

Beim Händeln der Blisterpackung 50 läßt sich eine statische Aufladung der Packung nicht vermeiden. Die entstehenden Feldkräfte sind durch Pfeile 70 angedeutet (Fig. 1). Diese Feldkräfte wirken auf die Außenseite des Käfigs 18. Da der Käfig 18 gewichtsmäßig sich auf der Tellerstange 14 abstützt, auf der auch über das Dreibein 12 das Gewicht der Blisterpackung 50 abgetragen wird, wirken sich die Feldkräfte, die durch ein elektrisches Feld verursacht werden, welches durch die elektrisch aufgeladene und auf dem Dreibein 12 aufliegende Blisterpackung 50 erzeugt sind, für das Wägeergebnis nicht aus.

Zur Reduzierung der von einer Tellerstange 14 zu tragenden toten Lasten besitzen die Außenwände des Käfigs 18 Aussparungen 80, die eine Materialersparnis und damit auch eine Gewichtsersparnis für den Käfig 18 bedeuten. Diese Aussparungen 80 können durch Verwendung von Drahtgitter oder gelochten Blechen zur Verfügung gestellt werden. In der Zeichnung sind lediglich einige dieser Aussparungen 80 angedeutet.

Wie schon ausgeführt, wird die Blisterpackung 50 einmal so gewogen, wie sie in der Zeichnung dargestellt ist, also mit eingelagertem Pulver 60. Anschließend wird das Pulver 60 aus der Blisterpackung 50 entfernt und die Blisterpackung 50 ohne Pulver gewogen. Das Differenzgewicht der beiden Wägungen stellt das Nettogewicht dar und repräsentiert das Gewicht des Pulvers 60.

Der Bereich des Käfigs 18 ist von einem als Windschutz dienenden winddichten Gehäuse 82 umgeben, welches aus elektrisch leitendem Material besteht.

## Patentansprüche

1. Waage (10) zum Verwiegen im Mikrogramm-Gewichtsbereich von Blisterpackungen (50),
- mit einem Waageteller (12, 14), auf dem die zumindest eine jeweils zu wiegende Blisterpackung (50) auflagerbar ist,
- mit einer aus aufladbarem Material bestehenden Blisterpackung (50),
**dadurch gekennzeichnet , dass**
- der Waageteller (12, 14) im Inneren eines als Käfig (18) ausgebildeten Körpers so vorhanden ist, dass
- die zumindest eine auf dem Waageteller (12, 14) aufruhende Blisterpackung (50) im Inneren (34) des Käfigs (18) vorhanden ist,
- der Käfig (18) am Waageteller (12, 14) lastenmäßig befestigt ist, so dass Feldkräfte, die durch ein elektrisches Feld verursacht werden, welches durch eine elektrisch aufgeladene und auf dem Waageteller aufliegende Blisterpackung (50) erzeugbar ist, praktisch ausschließlich auf den Waageteller (12, 14) einwirksam sind.

2. Waage nach Anspruch 1,
**dadurch gekennzeichnet, dass**
- der Waageteller (12, 14) und/oder der Körper (18) geerdet ist.

3. Waage nach Anspruch 1 oder 2,
**dadurch gekennzeichnet, dass**
- der Käfig (18) eine Öffnung besitzt, durch die die zu wiegende mindestens eine Blisterpackung (50) jeweils in den Käfig (18) hineinführbar bzw. aus dem Käfig (18) wieder entnehmbar ist.

4. Waage nach einem der vorstehenden Ansprüche,
**dadurch gekennzeichnet, dass**
- die Wände des Käfigs (18) Materialausnehmungen (80) aufweisen.

5. Waage nach Anspruch 4,
**dadurch gekennzeichnet, dass**
- die Wände des Käfigs (18) aus Lochblech oder Drahtgitter bestehen.

6. Waage nach einem der vorstehenden Ansprüche,
**dadurch gekennzeichnet, dass**
- der Waageteller (12, 14) ein Drei-Punkt-Auflager (12) für die zu wiegende mindestens eine Blisterpackung (50) besitzt.

7. Waage nach Anspruch 6,
**dadurch gekennzeichnet, dass**
- die drei Beine (12.1, 12.2, 12.3) des Drei-Punkt-Auflagers (12) durch Aussparungen (22, 24, 26) in der Bodenplatte (20) des Käfigs (18) hindurchgeführt sind.

8. Waage nach einem der vorstehenden Ansprüche,
**dadurch gekennzeichnet, dass**
- der Körper wie insbesondere der Käfig (18) ein Drei-Punkt-Auflager für die zu wiegende mindestens eine Blisterpackung (50) besitzt.

9. Waage nach Anspruch 8,
**dadurch gekennzeichnet, dass**
- die drei Beine des Drei-Punkt-Auflagers hochgebogene Teile der Bodenplatte (20) des Käfigs sind.

10. Waage nach einem der vorstehenden Ansprüche,
**dadurch gekennzeichnet, dass**
- ein winddichtes Gehäuse (82) zumindest für den Bereich des Waagetellers (12, 14) so vorhanden ist, dass
- dieses Gehäuse (82) als Windschutz für die zumindest eine auf dem Waageteller aufliegende Blisterpackung (50) vorhanden ist.

11. Waage nach Anspruch 10,
**dadurch gekennzeichnet, dass**
- das winddichte Gehäuse elektrisch leitend ausgebildet und geerdet ist.

12. Waage nach Anspruch 11,
**dadurch gekennzeichnet, dass**
- das winddichte Gehäuse (82) aus geerdetem Metall oder elektrisch leitend bedampftem Glas besteht.

13. Verfahren zum Überprüfen der richtigen Menge von in Blisterpackungen luftdicht abgepacktem Pulver mittels einer Waage nach einem der vorstehenden Ansprüche,
**dadurch gekennzeichnet, dass**
- von einer Serie von mit Pulver luftdicht zu verpackenden Blisterpackungen nur ein bestimmter Prozentsatz dieser Blisterpackungen, eine Teilmenge von Blisterpackungen, überprüft wird, indem
- die luftdichte Hülle der zumindest einen zu überprüfenden Blisterpackung zumindest so weit geöffnet oder zerstört wird, dass das Pulver nicht mehr luftdicht verpackt ist,
- als nächstes dann das Bruttogewicht dieser zumindest einen Blisterpackung ermittelt und anschließend das Pulver aus den Packungen entfernt wird, das Nettogewicht dieser zumindest einen Blisterpackung ermittelt und das sich durch Differenz aus dem Brutto- und Taragewicht ergebende Nettogewicht mit dem Soll-Gewicht des in eine Blisterpackung einzufüllenden Pulvergewichts verglichen wird,
- sofern das Nettogewicht das um ein Toleranzgewicht verkleinerte oder vergrößerte Soll-Gewicht nicht unter-oder überschreitet, wird diese ursprünglich mit Pulver abgepackte und überprüfte Blisterpackung als eine sogenannte gute Blisterpackung gewertet und die diese überprüfte Blisterpackung enthaltende Serie an Blisterpackungen, mit Ausnahme der überprüften Blisterpackung, weiter verwertet, oder anderenfalls,
- sofern das Toleranzgewicht nicht eingehalten wird, werden ebenso wie diese überprüfte Blisterpackung auch die übrigen Blisterpackungen dieser Serie als nicht gute, d. h. als dem Ausschuss zuzuführende Blisterpackungen gewertet.

## Claims

1. Balance (10) for weighing blister packs (50) in the microgram weight range,
- with a balance pan (12, 14) on which the at least one blister pack (50) to be weighed can be placed,
- with a blister pack (50) made of chargeable material,
**characterized in that**
- the balance pan (12, 14) is present in the inside of a body designed as a cage (18), such that
- the at least one blister pack (50) resting on the balance pan (12, 14) is present in the inside (34) of the cage (18),
- the cage (18) is secured as a load on the balance pan (12, 14), so that field forces caused by an electric field, which field can be generated by an electrically charged blister pack (50) lying on the balance pan, act practically exclusively on the balance pan (12, 14).

2. Balance according to Claim 1,
**characterized in that**
- the balance pan (12, 14) and/or the body (18) is earthed.

3. Balance according to Claim 1 or 2,
**characterized in that**
- the cage (18) has an opening through which the at least one blister pack (50) to be weighed can be guided into the cage (18) and can be removed again from the cage (18).

4. Balance according to one of the preceding claims,
**characterized in that**
- the walls of the cage (18) have material cutouts (80).

5. Balance according to Claim 4,
**characterized in that**
- the walls of the cage (18) are made of perforated sheet metal or wire lattice.

6. Balance according to one of the preceding claims,
**characterized in that**
- the balance pan (12, 14) has a three-point support (12) for the at least one blister pack (50) to be weighed.

7. Balance according to Claim 6,
**characterized in that**
- the three legs (12.1, 12.2, 12.3) of the three-point support (12) are guided through cutouts (22, 24, 26) in the bottom plate (20) of the cage (18).

8. Balance according to one of the preceding claims,
**characterized in that**
- the body, in particular the cage (18), has a three-point support for the at least one blister pack (50) to be weighed.

9. Balance according to Claim 8,
**characterized in that**
- the three legs of the three-point support are raised parts of the bottom plate (20) of the cage.

10. Balance according to one of the preceding claims,
**characterized in that**
- a windproof housing (82) is provided at least for the area of the balance pan (12, 14), such that
- this housing (82) acts as a wind protection for the at least one blister pack (50) lying on the balance pan.

11. Balance according to Claim 10,
**characterized in that**
- the windproof housing is electrically conductive and is earthed.

12. Balance according to Claim 11,
**characterized in that**
- the windproof housing (82) is made of earthed metal or of glass metallized to be electrically conductive.

13. Method for checking the correct amount of powder packed in an airtight manner in blister packs using a balance according to one of the preceding claims, **characterized in that**
- from a series of blister packs to be packed in an airtight manner with powder, only a specific percentage of these blister packs, a proportion of blister packs, is checked, in which method
- the airtight shell of the at least one blister pack to be checked is at least opened so far, or is destroyed, so that the powder is no longer packaged in an airtight manner,
- next, the gross weight of this at least one blister pack is determined and the powder is then removed from the packs, the net weight of this at least one blister pack is determined, and the net weight obtained by the difference between the gross weight and the tare weight is compared with the desired weight of the powder to be filled into a blister pack,
- if the net weight does not fall short of or exceed the desired weight, which is reduced or increased by a tolerance weight, this blister pack, which was originally packed with powder and has been checked, is assessed as being a good blister pack, and the series of blister packs comprising this checked blister pack is further evaluated, except for the checked blister pack,
- if the tolerance weight is not observed, the other blister packs from the same series as this checked blister pack are also assessed as not good, i.e. as blister packs to be rejected.

## Revendications

1. Balance (10) pour peser des emballages blister (50) dans la plage pondérale exprimée en microgrammes, comprenant
- un plateau (12, 14) sur lequel peut être déposé l'emballage blister (50) prévu au minimum, devant être respectivement pesé,
- un emballage blister (50) constitué d'un matériau pouvant être chargé,
**caractérisée par le fait que**
- le plateau (12, 14) de la balance se trouve à l'intérieur d'un corps réalisé sous la forme d'une cage (18), de sorte que
- l'emballage blister (50), prévu au minimum et reposant sur le plateau (12, 14) de la balance, est situé dans l'espace interne (34) de ladite cage (18),
- ladite cage (18) est fixée audit plateau (12, 14) de la balance avec transfert de charges, de façon telle que des forces, développées par un champ électrique pouvant être engendré par un emballage blister (50) chargé électriquement et reposant sur le plateau de la balance, n'agissent quasi exclusivement que sur ledit plateau (12, 14) de la balance.

2. Balance selon la revendication 1,
**caractérisée par le fait que**
- le plateau (12, 14) de ladite balance et/ou le corps (18) est (sont) raccordé(s) à la terre.

3. Balance selon la revendication 1 ou 2,
**caractérisée par le fait que**
- la cage (18) possède une ouverture par l'intermédiaire de laquelle l'emballage blister (50) prévu au minimum, devant être pesé, peut être respectivement introduit dans ladite cage (18) ou de nouveau extrait de ladite cage (18).

4. Balance selon l'une des revendications précédentes,
**caractérisée par le fait que**
- les parois de la cage (18) présentent des trous (80) pratiqués dans la matière.

5. Balance selon la revendication 4,
**caractérisée par le fait que**
- les parois de la cage (18) consistent en de la tôle perforée ou en un grillage métallique.

6. Balance selon l'une des revendications précédentes,
**caractérisée par le fait que**
- le plateau (12, 14) de ladite balance présente un appui (12) à trois points destiné à l'emballage blister (50) prévu au minimum, devant être pesé.

7. Balance selon la revendication 6,
**caractérisée par le fait que**
- les trois jambages (12.1,12.2, 12.3) de l'appui (12) à trois points traversent des perçages (22, 24, 26) pratiqués dans la plaque de fond (20) de la cage (18).

8. Balance selon l'une des revendications précédentes,
**caractérisée par le fait que**
- le corps, tel que la cage (18) en particulier, possède un appui à trois points destiné à l'emballage blister (50) prévu au minimum, devant être pesé.

9. Balance selon la revendication 8,
**caractérisée par le fait que**
- les trois jambages de l'appui à trois points se présentent comme des parties relevées de la plaque de fond (20) de la cage.

10. Balance selon l'une des revendications précédentes,
**caractérisée par**
- la présence d'un boîtier (82) étanche aux courants d'air, affecté au moins à la région du plateau (12, 14) de ladite balance, de façon telle que
- ce boîtier (82) se présente comme un capot protecteur de l'emballage blister (50) prévu au minimum, reposant sur ledit plateau de la balance.

11. Balance selon la revendication 10,
**caractérisée par le fait que**
- le boîtier étanche aux courants d'air est de réalisation électriquement conductrice et est raccordé à la terre.

12. Balance selon la revendication 11,
**caractérisée par le fait que**
- le boîtier (82) étanche aux courants d'air consiste en un métal raccordé à la terre, ou en du verre rendu électriquement conducteur par métallisation.

13. Procédé pour vérifier la quantité correcte de poudre emballée hermétiquement dans des emballages blister, au moyen d'une balance selon l'une des revendications précédentes,
**caractérisé par le fait que**,
- au sein d'une série d'emballages blister devant être emplis hermétiquement de poudre, seuls sont vérifiés un pourcentage déterminé de ces emballages blister, une quantité partielle d'emballages blister, du fait que
- l'enveloppe hermétique de l'emballage blister, devant être vérifié au minimum, est ouverte ou détruite au moins de telle sorte que la poudre ne soit plus emballée hermétiquement,
- au stade successif, le poids brut de cet emballage blister prévu au minimum est déterminé, puis la poudre est enlevée des emballages, le poids net de cet emballage blister prévu au minimum est déterminé et le poids net, résultant de la différence entre le poids brut et le poids de tarage, est comparé au poids de consigne de la masse de poudre devant être déversée dans un emballage blister,
- dans la mesure où le poids net ne dépasse pas négativement ou positivement le poids de consigne diminué ou augmenté d'un poids de tolérance, cet emballage blister, initialement débarrassé de poudre et vérifié, est évalué comme un "bon" emballage blister et la série d'emballages blister, renfermant cet emballage blister vérifié, continue d'être évaluée à l'exception de l'emballage blister vérifié, faute de quoi,
- dans la mesure où le poids de tolérance n'est pas respecté, les emballages blister restants de cette série sont évalués, tout comme cet emballage blister vérifié, comme des emballages blister non conformes, c'est-à-dire voués au rebut.
